# FASCICULE DE BREVET EUROPEEN

(11) **EP 2 824 785 B1**
(45) Date de publication et mention de la délivrance du brevet: **29.07.2015**
(21) Numéro de dépôt: 14305758.6
(22) Date de dépôt: 22.05.2014
(51) Int. Cl.: H02G 3/18, H02G 3/14

(54) **Ensemble articulé d un boîtier pour appareillage électrique et boîte de sol comprenant un tel ensemble**
Gelenkeinheit eines Gehäuses für Elektrogerät, und Bodendose, die eine solche Einheit umfasst
Hinged assembly of a housing for electrical equipment and floor box including such an assembly

(30) Priorité: 12.07.2013 FR 1356899
(43) Date de publication de la demande: 14.01.2015
(73) Titulaire: Legrand France, 87000 Limoges (FR); Legrand SNC, 87000 Limoges (FR)
(72) Inventeur: Lochet, Anthony, 72170 Beaumont sur Sarthe (FR)
(74) Mandataire: Orsini, Fabienne

(56) Documents cités:
- DE-A1- 19 625 187
- DE-C1- 4 125 509
- US-A1- 2010 072 198

## Description

### DOMAINE TECHNIQUE AUQUEL SE RAPPORTE L'INVENTION

La présente invention concerne de manière générale les boîtiers pour appareillages électriques dans lesquels le corps de boîte supporte un cadre de façade auquel est articulé un volet pour la protection de chaque appareillage électrique lorsqu'il n'est pas utilisé.

Elle concerne plus particulièrement, un ensemble articulé d'un boîtier pour appareillage électrique, comprenant un cadre qui délimite un évidement central et un volet qui, monté pivotant sur le cadre par l'intermédiaire d'une articulation, est adapté à fermer cet évidement central, ladite articulation comprenant un élément intermédiaire monté à pivotement sur le cadre autour d'un premier axe et coopérant avec ledit volet autour d'un second axe parallèle audit premier axe.

L'invention trouve une application particulièrement avantageuse notamment dans la réalisation d'une boîte de sol pour prises électriques ou interrupteurs à protection étanche, destinée à être encastrée dans un plancher.

### ARRIERE-PLAN TECHNOLOGIQUE

On connaît déjà notamment des documents DE4125509, CN2813715 et US20100072198, des ensembles articulés du type précité dans lesquels le volet est monté à pivotement sur l'élément intermédiaire qui est lui-même pivotant sur le cadre pour permettre une ouverture à 180 degrés du volet par rapport au cadre.

Mais dans ces ensembles, il n'est pas possible de bloquer le volet dans un angle d'ouverture inférieur ou égal à 90 degrés.

Or, dans certains pays, la norme impose que le volet s'ouvre avec un angle d'ouverture maximum égal à 90 degrés.

Pour répondre à cette norme, il convient donc de prévoir d'autres systèmes d'articulation que celui des ensembles précités, ce qui augmente les références de produits et les coûts de fabrication.

### OBJET DE L'INVENTION

Afin de remédier à cet inconvénient de l'état de la technique, l'invention propose un ensemble articulé d'un boîtier dans lequel l'articulation du volet autorise une ouverture de celui-ci à un angle d'ouverture supérieur à 90 degrés et permet facilement de limiter l'ouverture du volet à un angle d'ouverture maximum égal à 90 degrés afin, le cas échéant, de respecter la norme du pays de commercialisation.

Plus particulièrement, on propose selon l'invention un ensemble articulé tel que défini en introduction dans lequel l'élément intermédiaire présente à proximité du second axe, d'une part, une surface arrondie destinée à coopérer avec ledit couvercle pour autoriser le pivotement dudit couvercle autour du second axe, et, d'autre part, un moyen de butée destiné à coopérer avec ledit couvercle pour interdire le pivotement dudit couvercle autour du second axe, et dans lequel ledit élément intermédiaire est adapté à être rapporté sur le cadre dans deux configurations différentes orientées à 180 degrés l'une par rapport à l'autre, à savoir, une première configuration dans laquelle le couvercle coopère avec ladite surface arrondie et une seconde configuration dans laquelle le couvercle coopère avec ledit moyen de butée.

D'autres caractéristiques non limitatives et avantageuses de l'ensemble articulé conforme à l'invention sont les suivantes :
- ledit élément intermédiaire présente une section de forme générale oblongue s'étendant suivant un grand axe, et il est percé de deux ouvertures traversantes qui s'étendent parallèlement à un axe longitudinal perpendiculaire audit grand axe, les deux ouvertures traversantes étant situées le long de deux bords longitudinaux d'extrémité de l'élément intermédiaire et accueillant deux tiges qui forment les premier et second axes ;
- ladite surface arrondie de l'élément intermédiaire constitue une partie de la surface externe dudit élément intermédiaire qui entoure partiellement l'ouverture traversante qui accueille la tige formant le second axe ;
- ledit moyen de butée est une surface plane qui s'étend perpendiculairement audit grand axe de la section de l'élément intermédiaire, cette surface plane s'étendant en longueur parallèlement audit axe longitudinal de l'élément intermédiaire et en hauteur perpendiculairement à cet axe longitudinal ;
- la surface plane constitue une partie de la surface externe de la partie intermédiaire située le long d'un bord longitudinal d'extrémité de l'élément intermédiaire au droit de l'ouverture traversante qui accueille la tige formant le second axe ;
- ledit moyen de butée est une surface plane qui s'étend en porte-à-faux à partir de l'élément intermédiaire, parallèlement au grand axe de la section dudit élément intermédiaire ;
- ladite surface plane appartient à un verrou rapporté sur ledit élément intermédiaire ; et
- ledit élément intermédiaire porte en saillie de sa surface externe, une nervure de section carrée qui s'étend parallèlement à l'axe longitudinal de l'élément intermédiaire, cette nervure comportant, d'une part, deux faces planes opposées parallèles tournées respectivement vers ledit moyen de butée et ladite surface arrondie, et, d'autre part, une face plane d'extrémité perpendiculaire aux deux faces planes opposées, cette face plane d'extrémité constituant un bord longitudinal d'extrémité de l'élément intermédiaire.

L'invention propose également une boîte de sol pour appareillage électrique comprenant un boîtier ouvert à l'avant et un ensemble articulé selon l'invention rapporté sur le boîtier autour de son ouverture avant.

Selon une caractéristique avantageuse, la boîte de sol conforme à l'invention comporte une bague encliquetée dans un orifice du couvercle, cette bague délimitant un évidement central d'axe X destiné à accueillir axialement le barillet d'un mécanisme de serrure ou le corps d'un verrou, et étant pourvue de moyens de blocage agencés pour bloquer la rotation autour de l'axe X du barillet dans ledit évidement central et pour limiter la rotation autour de l'axe X du corps du verrou à un angle déterminé.

Préférentiellement, lesdits moyens de blocage comprennent deux méplats diamétralement opposés formés dans un profil circulaire du contour de l'évidement central de la bague.

Selon une autre caractéristique avantageuse, dans la boîte de sol conforme à l'invention, le couvercle comporte un orifice traversant dont les dimensions internes sont égales au jeu près aux dimensions externes d'une bague délimitant un évidement central d'axe X destiné à accueillir axialement le barillet d'un mécanisme de serrure ou le corps d'un verrou, et étant pourvue, d'une part, de moyens de blocage agencés pour bloquer la rotation autour de l'axe X du barillet dans ledit évidement central et pour limiter la rotation autour de l'axe X du corps du verrou à un angle déterminé, et, d'autre part, d'au moins une patte qui s'étend parallèlement à l'axe X de l'évidement central et qui porte en saillie à proximité de son extrémité libre une dent d'accrochage, ledit orifice du couvercle étant fermé à l'avant du couvercle, par un opercule pourvu en son centre d'un moyen de positionnement de la pointe d'un foret de perçage, et étant bordé à l'arrière du couvercle, par une paroi pourvue d'une encoche agencée pour l'accrochage de la dent d'accrochage de ladite bague.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 et 2 sont des vues schématiques en perspective d'une boîte de sol fermée et ouverte ;
- la figure 3 est une vue schématique éclatée de la boîte de sol de la figure 1 ;
- les figures 4 et 5 sont des vues schématiques en perspective de dessus et de dessous du cadre de la boîte de sol de la figure 3 ;
- la figure 6 est une vue schématique en perspective de l'élément intermédiaire de l'articulation du couvercle de la boîte de sol de la figure 3 ;
- la figure 7 est une vue de face d'une extrémité de l'élément intermédiaire de la figure 6 ;
- la figure 8 est une vue schématique en perspective de dessus du couvercle de la boîte de sol de la figure 3 ;
- la figure 9 est une vue schématique en perspective de dessous du couvercle de la figure 8 ;
- la figure 10 est une vue de face de la figure 9 ;
- la figure 11 est une vue schématique en coupe de la boîte de sol de la figure 1, couvercle ouvert, avec l'élément intermédiaire de l'articulation positionné dans sa première configuration ;
- la figure 12 est une vue schématique en coupe de la boîte de sol de la figure 1, couvercle ouvert, avec l'élément intermédiaire de l'articulation positionné dans sa deuxième configuration ;
- les figures 13 et 14 sont des vues schématiques en perspective de dessus et de dessous du verrou de la boîte de sol de la figure 3 ;
- la figure 15 est une vue en coupe selon le plan B-B du verrou de la figure 14 ;
- la figure 16 est une vue schématique en perspective d'un mécanisme de serrure adapté à être rapporté dans l'orifice du couvercle de la figure 17 ;
- la figure 17 est une vue schématique partielle de la face arrière d'une variante du couvercle de la boîte de sol de la figure 3 ;
- la figure 18 est une vue schématique partielle éclatée en perspective d'un boîtier pour appareillage électrique équipé d'un accessoire de verrouillage de son couvercle ;
- la figure 19 est une vue schématique partielle en perspective assemblée du boîtier de la figure 18 ;
- la figure 20 est une vue schématique en perspective arrière de la figure 19;
- la figure 21 est une vue schématique partielle en perspective de l'accessoire de verrouillage de la figure 19 accueillant le mécanisme de serrure de la figure 16 ;
- la figure 22 est une vue schématique partielle en perspective de l'accessoire de verrouillage de la figure 19 accueillant le verrou de la figure 13 ;
- la figure 23 est une vue schématique partielle en perspective arrière de la figure 21 ; et
- la figure 24 est une vue schématique partielle en perspective arrière de la figure 22.

En préliminaire, on notera que les éléments identiques ou similaires des différents modes de réalisation de l'invention seront dans la mesure du possible référencés par les mêmes signes de référence et ne seront pas décrits à chaque fois.

En outre, dans la description qui va suivre, le terme « avant » sera employé pour qualifier des parties ou éléments orientés vers l'utilisateur tandis que le terme « arrière » sera employé pour qualifier des parties ou éléments orientés à l'opposé vers la paroi de réception.

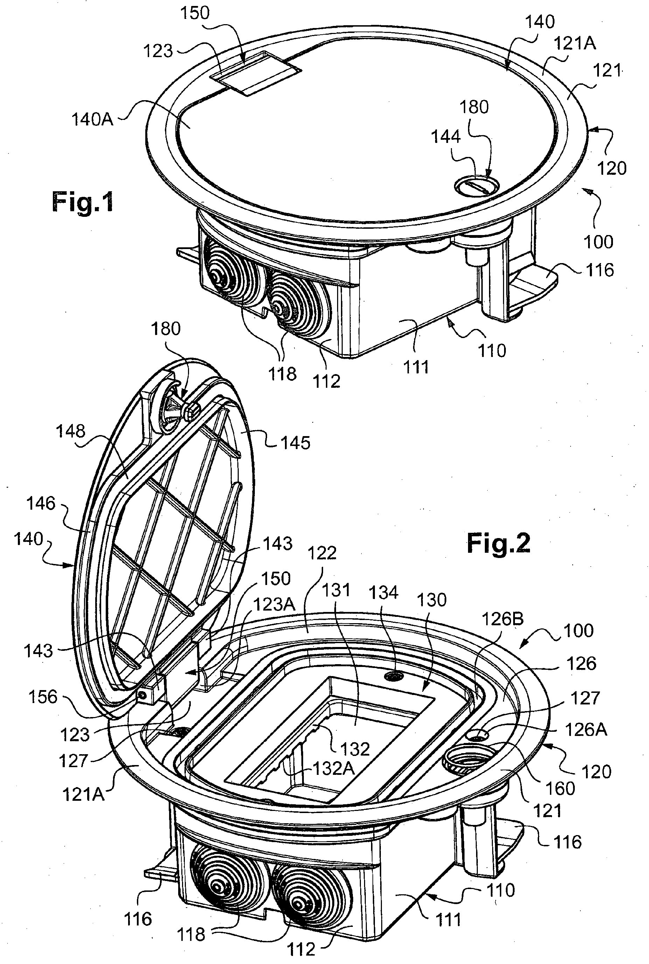

Sur les figures 1 à 3, 11 et 12 on a représenté une boîte de sol 100 pour appareillages électriques qui comporte un boîtier 110, un cadre 120 de façade rapporté à l'avant du boîtier 110, ce cadre 120 délimitant un évidement central logeant un support d'appareillage 130, et un couvercle 140 qui, monté pivotant sur le cadre 120 par l'intermédiaire d'une articulation, est adapté à fermer cet évidement central pour protéger chaque appareillage électrique rapporté sur le support d'appareillage 130 lorsqu'il n'est pas utilisé.

Ici, tel que représenté, le boîtier 110 présente une forme générale rectangulaire avec un fond bordé par une paroi 111, 112 périphérique qui s'élève perpendiculairement au fond. Le fond et la paroi 111, 112 définissent un espace intérieur, ouvert à l'avant, destiné à accueillir le mécanisme de chaque appareillage électrique rapporté sur le support d'appareillage 130 ainsi que les conducteurs électriques destinés à l'alimentation électrique de ce mécanisme. Un côté latéral 112 de la paroi 111, 112 ainsi que le fond du boîtier 110 sont percés d'ouvertures 112A circulaires pour l'introduction des câbles et conducteurs électriques dans l'espace intérieur du boîtier 110. Ces ouvertures 112A sont obturées par des bouchons 118 que l'installateur peut retirer pour ouvrir le boîtier afin d'y introduire les câbles et conducteurs nécessaires à l'alimentation électriques du ou des mécanismes d'appareillage. Sur la face externe des deux côtés longitudinaux 111 de la paroi du boîtier 110, il est prévu deux montants 117 qui courent en saillie sur toute la hauteur du boîtier. Chaque montant 117 comporte à son extrémité arrière, située à proximité du fond du boîtier, un retour perpendiculaire. Ces montants 117 permettent de maintenir en place les corps filetés de deux vis 127 traversant des ouvertures 126A du cadre 120. Des languettes 116 sont vissées à l'extrémité des corps filetés des vis 127. Ces languettes 116 reposent sur les retours desdits montants 117 (voir figure 2). Cet agencement de vis 127 et de languettes 116 permet à l'installateur de fixer le boîtier 110 de la boîte de sol 100 dans une paroi de réception creuse en vissant lesdites vis 127 pour déployer lesdites languettes 116 à la perpendiculaire de la paroi 112 du boîtier 110, derrière le panneau avant de la paroi de réception (non représentée). La paroi 111, 112 du boîtier 110 porte sur sa face interne des montants 114 percés de puits taraudés qui débouchent à proximité du bord 113 de l'ouverture avant du boîtier 110. Ces puits taraudés sont destinés à accueillir des vis 128 de fixation du cadre 120 de façade ainsi que les vis 134 de fixation du support d'appareillage 130 au cadre 120 et au boîtier 110. La paroi 111,112 du boîtier 110 porte sur sa face externe, à proximité du bord 113 de l'ouverture avant du boîtier 110, un cylindre 115 ouvert vers l'avant et destiné à accueillir une partie d'un mécanisme de verrouillage du couvercle 140 en position fermée sur le cadre 120. Enfin, la boîte de sol 100 représentée ici est une boîte étanche. Le boîtier 110 comporte alors une gorge 113A qui court le long du bord 113 de son ouverture avant et qui accueille un joint d'étanchéité 119.

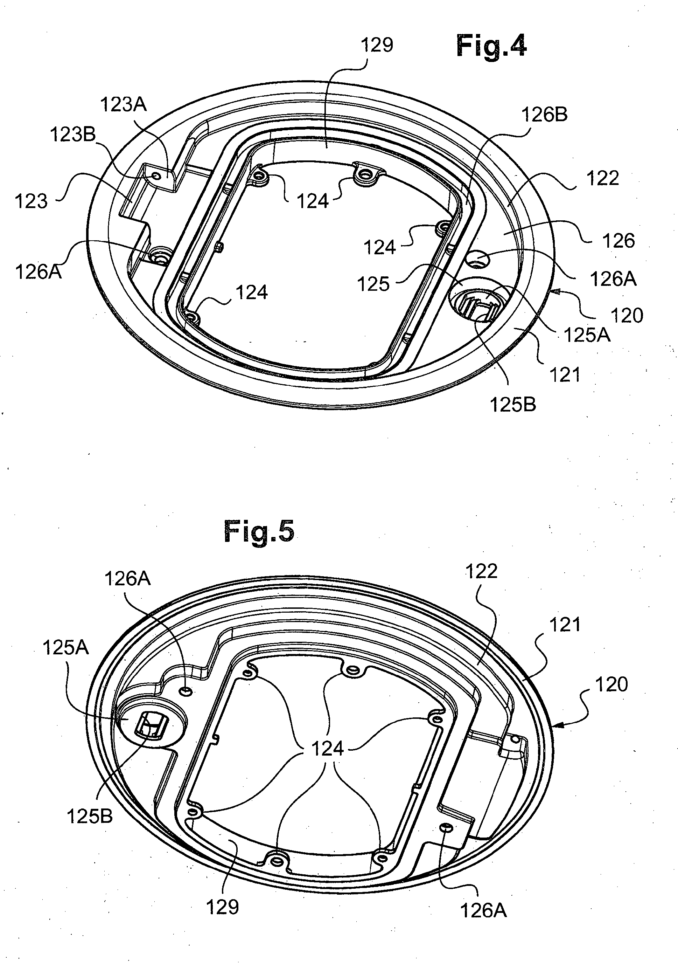

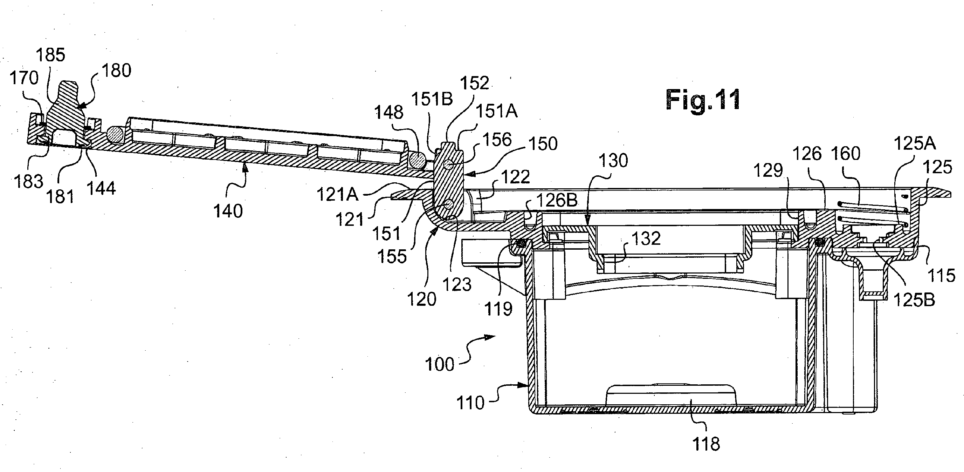

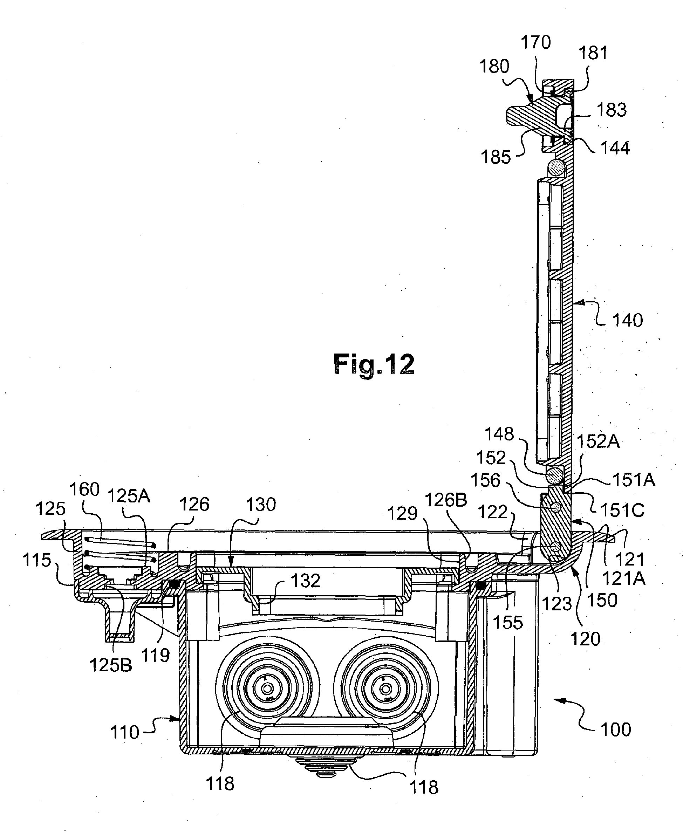

Comme le montrent mieux les figures 4 et 5, le cadre 120 de façade comporte ici un rebord externe 121 circulaire adapté à reposer sur la face avant de la paroi de réception (non représentée) de la boîte de sol 100. Ce cadre 120 comprend en renfoncement du rebord externe 121, une plate-forme 126 pourvue en son centre de l'évidement central. Comme le montrent les figures 11 et 12, la face arrière de la plate-forme 126 du cadre 120 s'applique contre le joint d'étanchéité 119 du boîtier 110. L'évidement central est délimité par une paroi 129 qui suit le contour de l'ouverture avant du boîtier 110. La paroi 129 porte en saillie des pattes 124 percées de trous. Quatre de ces pattes 124 prévues sur les deux grands côtés de la paroi 129 sont traversées par les vis 128 vissées dans les puits taraudés des montants 114 du boîtier 110 pour la fixation du cadre 120 au boîtier 110. Les deux autres pattes 124 prévues sur les deux petits côtés de la paroi 129 sont traversées par les vis 134 traversant des orifices 133 du support d'appareillage 130 logé dans l'évidement central et vissées dans les puits taraudés des montants 114 du boîtier 110 pour la fixation dudit support d'appareillage 130 au cadre 120 et au boîtier 110.

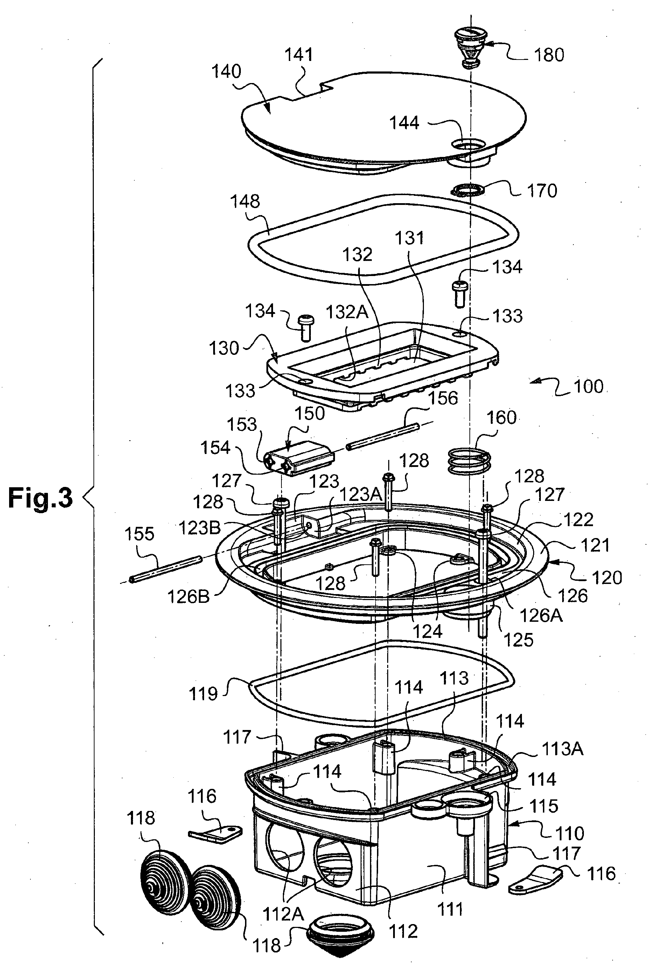

Comme le montre la figure 3, le support d'appareillage 130 logé entièrement dans l'évidement central du cadre 120, présente un contour externe rectangulaire qui suit le contour de la paroi 129 délimitant l'évidement central du cadre 120. Il forme lui-même un cadre dont l'ouverture centrale 131 accueille un ou plusieurs socles de mécanisme d'appareillage électrique (non représentés). Pour cela, la paroi 132 qui délimite l'ouverture centrale 131 présente un bord libre 132A crénelé pour permettre l'encliquetage du ou des socles de mécanisme d'appareillage électrique.

La plate-forme 126 du cadre 120 de façade comporte une gorge 126B qui court le long de la paroi 129 qui délimite l'évidement central. Cette gorge 126B est destinée à recevoir une nervure 145 prévue en saillie de la face arrière 140B du couvercle 140 lorsque celui-ci est fermé sur le cadre 120.

La plate-forme 126 du cadre 120 comporte également les deux ouvertures 126A de passage des corps filetés des vis 127 d'actionnement des languettes 116 de fixation du boîtier 110 dans une ouverture d'une paroi de réception creuse. La plate-forme 126 comporte un renfoncement cylindrique 125 dont le fond 125A est percé d'une ouverture oblongue 125B. Ce renfoncement cylindrique 125 est destiné à accueillir le mécanisme de verrouillage du couvercle 140 en position fermée sur le cadre 120. Lorsque le cadre 120 est fixé au boîtier 110, le fond 125A de ce renfoncement cylindrique 125 ferme l'ouverture avant du cylindre 115 du boîtier 110, l'ouverture oblongue 125B prévue dans le fond 125A dudit renfoncement cylindrique 125 débouchant à l'intérieur dudit cylindre 115 (voir figures 11 et 12).

Enfin, comme le montrent plus particulièrement les figures 3 à 5, le cadre 120 comprend une paroi 122 patriquement cylindrique qui relie la plate-forme 126 au rebord externe 121 circulaire. Cette paroi 122 délimite un logement dont le fond est formé par la plate-forme 126. Les parties fonctionnelles des appareillages électriques (non représentés) montés sur le support d'appareillage 130 émergent donc dans ce logement où elles sont accessibles à l'utilisateur lorsque le couvercle 140 de la boîte de sol 100 est ouvert. En renfoncement d'une partie droite de cette paroi 122, le cadre 120 comporte un logement 123 qui débouche sur la face avant 121A dudit rebord externe 121. Ce logement 123 comporte deux parois latérales 123A en regard percées de deux orifices 123B coaxiaux. Il loge l'articulation du couvercle 140 sur le cadre 120 (voir figures 1, 2, 11 et 12).

Comme le montrent plus particulièrement les figures 1 à 3 et 8 à 10, le couvercle 140, monté pivotant sur le cadre 120, se présente sous la forme d'une plaque au contour globalement circulaire avec une partie droite, dont les dimensions sont égales au jeu près aux dimensions du logement délimité par la paroi 122 du cadre 120 de sorte qu'en position fermée, ledit couvercle 140 est complètement logé dans ledit logement du cadre 120 en recouvrant la plate-forme 126 et l'évidement central de celle-ci (voir figure 1). En position fermée, la face avant 140A du couvercle 140 vient à effleurement de la face avant 121 A du rebord externe 121 du cadre 120 (voir figure 1).

Le couvercle 140 porte sur sa face arrière 140B une première nervure 145 destinée à s'engager dans la gorge 126B du cadre 120, lorsqu'il est en position fermée sur celui-ci. Autour de cette première nervure 145, le couvercle 140 porte une seconde nervure 146 qui délimite avec la première nervure, une rainure 147 logeant un joint d'étanchéité 148 destiné à s'appliquer contre la plate-forme 126 du cadre 120 lorsque le couvercle 140 est fermé sur celui-ci afin de réaliser une fermeture étanche de la partie avant de la boîte de sol 100.

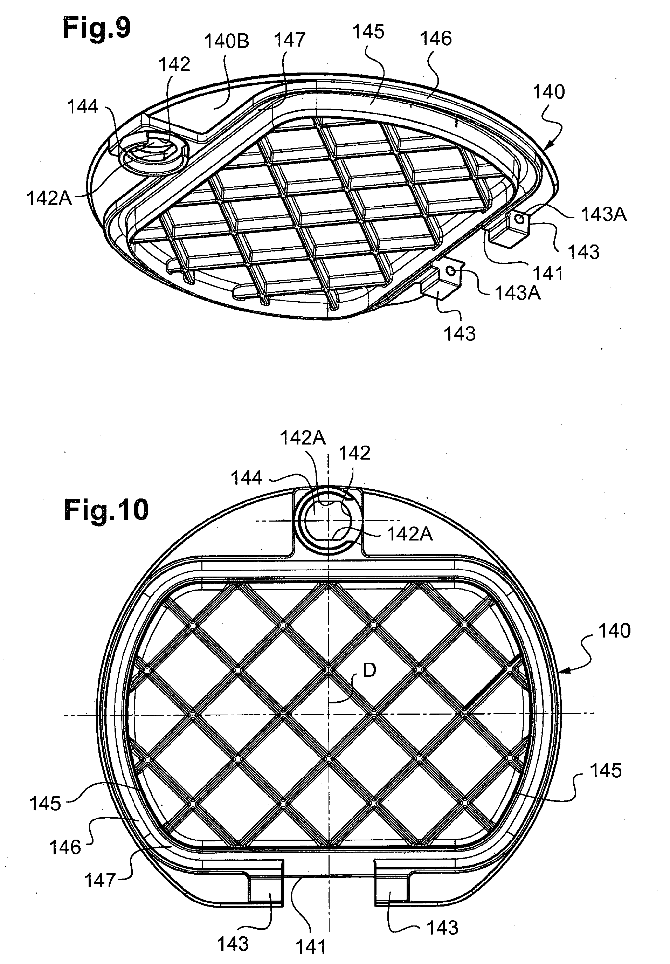

En outre, la partie droite du contour du couvercle 140 comprend une encoche 141 rectangulaire et il porte sur sa face arrière 140B, deux paliers 143 qui bordent les deux côtés transversaux parallèles de ladite encoche 141 (voir figures 9 et 10). Ces paliers 143 sont percés de conduits 143A coaxiaux, dans lesquels est enfilée une tige 156 formant un axe de pivotement du couvercle 140 (voir figure 2).

Plus particulièrement, l'articulation du couvercle 140 comprend un élément intermédiaire 150 monté à pivotement sur le cadre 120 autour d'un premier axe 155 et coopérant avec ledit couvercle 140 autour d'un second axe 156 parallèle audit premier axe 155 (voir figures 11 et 12).

Selon une caractéristique très avantageuse, l'élément intermédiaire 150 présente à proximité du second axe 156, d'une part, une surface arrondie 151B destinée à coopérer avec ledit couvercle 140 pour autoriser le pivotement dudit couvercle 140 autour du second axe 156 (voir figure 11), et, d'autre part, un moyen de butée 151A destiné à coopérer avec ledit couvercle 140 pour interdire le pivotement dudit couvercle 140 autour du second axe 156 (voir figure 12), et, ledit élément intermédiaire 150 est adapté à être rapporté sur le cadre 120 dans deux configurations différentes orientées à 180 degrés l'une par rapport à l'autre, à savoir, une première configuration, représentée sur la figure 11, dans laquelle le couvercle 140 coopère avec ladite surface arrondie 151 B pour s'ouvrir d'un angle compris en 90 degrés et 180 degrés par rapport à la face avant 121A du bord externe 121 du cadre 120 et une seconde configuration, représentée sur la figure 12, dans laquelle le couvercle 140 coopère avec ledit moyen de butée 151A pour rester immobile par rapport audit élément intermédiaire 150 et s'ouvrir au maximum à 90 degrés par rapport à la face avant 121A du bord externe 121 du cadre 120.

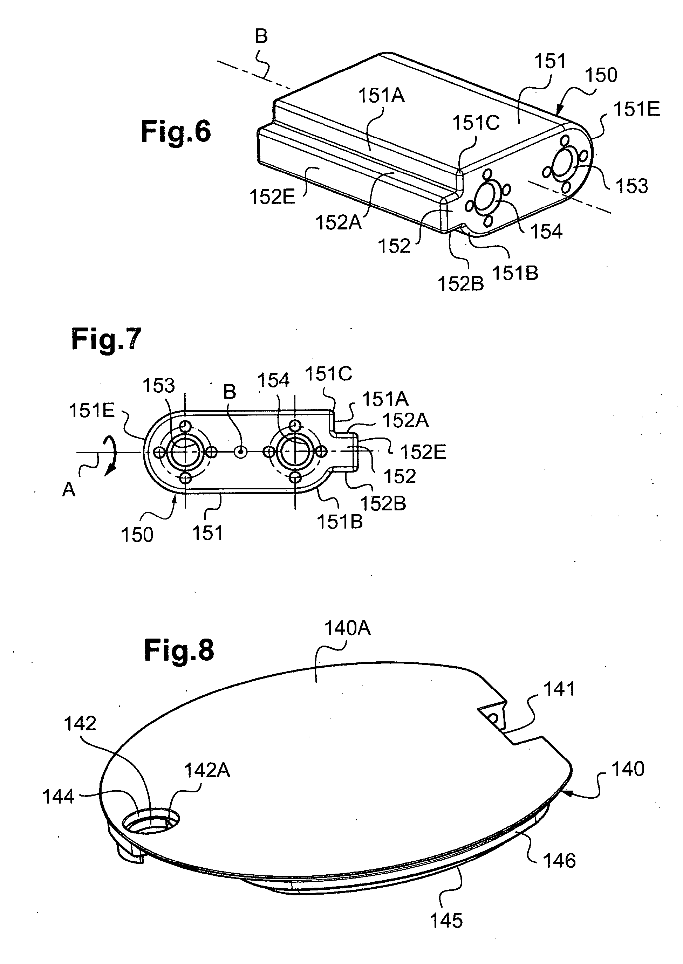

Comme le montrent plus particulièrement les figures 6 et 7, l'élément intermédiaire 150 présente ici une section de forme générale oblongue s'étendant suivant un grand axe A, et il est percé de deux ouvertures traversantes 153,154 qui s'étendent parallèlement à un axe longitudinal B perpendiculaire audit grand axe A.

Les deux ouvertures traversantes 153,154 sont situées le long de deux bords longitudinaux d'extrémité 151 E, 152E de l'élément intermédiaire 150. Elles sont destinées à accueillir deux tiges 155,156 qui forment les premier et second axes (voir figure 1). L'ouverture traversante 153 qui accueille la tige 155 formant le premier axe est partiellement entourée par le bord longitudinal d'extrémité 151E arrondi de l'élément intermédiaire 150.

Ladite surface arrondie 151B de l'élément intermédiaire 150 constitue une partie de la surface externe 151 dudit élément intermédiaire 150 qui entoure partiellement l'ouverture traversante 154 qui accueille la tige 156 formant le second axe. Le moyen de butée est ici une surface plane 151A qui s'étend perpendiculairement audit grand axe A de la section de l'élément intermédiaire 150. Cette surface plane 151A s'étend en longueur parallèlement audit axe longitudinal B de l'élément intermédiaire 150 et en hauteur perpendiculairement à cet axe longitudinal B. La surface plane 151A constitue ici une partie de la surface externe 151 de la partie intermédiaire 150 située le long d'un bord longitudinal d'extrémité 152E de l'élément intermédiaire 150 au droit de l'ouverture traversante 154 qui accueille la tige 156 formant le second axe. Cette surface plane 151A se raccorde par un coin 151C à la partie plane de la surface externe 151 de l'élément intermédiaire 150.

Selon une variante non représentée, on pourrait prévoir que ledit moyen de butée soit constitué par une surface plane qui s'étend en porte-à-faux à partir de l'élément intermédiaire, parallèlement au grand axe de la section dudit élément intermédiaire. Dans ce cas, ladite surface plane pourrait avantageusement appartenir à un verrou rapporté sur ledit élément intermédiaire.

Comme le montrent les figures 6 et 7, l'élément intermédiaire 150 porte en saillie de sa surface externe 151, une nervure 152 de section carrée qui s'étend parallèlement à l'axe longitudinal B et qui comporte, d'une part, deux faces planes opposées 152A,152B parallèles tournées respectivement vers ladite surface plane 151A (formant le moyen de butée) et ladite surface arrondie 151B, et, d'autre part, une face plane d'extrémité 152E perpendiculaire aux deux faces planes opposées 152A,152B, cette face plane d'extrémité constituant un bord longitudinal d'extrémité de l'élément intermédiaire 150.

L'installateur peut facilement placer l'élément intermédiaire 150 dans le logement 123 du cadre 120 dans l'une ou l'autre de ses deux configurations en retournant ledit élément intermédiaire 150 autour du grand axe A de telle façon que le bord longitudinal d'extrémité 151E arrondi de l'élément intermédiaire 150 est toujours placé au fond dudit logement 123 et que la nervure 152 dudit élément intermédiaire 150 est toujours tournée vers l'évidement central du cadre 120.

Quelle que soit la configuration de l'élément intermédiaire 150, la tige 155 est enfilée au travers de l'ouverture traversante 153 de celui-ci et dans les orifices 123B coaxiaux des parois latérales 123A du logement 123 du cadre 120 pour lier à pivotement l'élément intermédiaire 150 au cadre 120.

Quelle que soit la configuration de l'élément intermédiaire 150, la tige 156 est enfilée au travers de l'ouverture traversante 154 de celui-ci et dans les conduits 143A coaxiaux des paliers 143 du couvercle 140 pour lier ledit élément intermédiaire 150 au couvercle 140.

Dans la première configuration de montage de l'élément intermédiaire 150 (représentée sur la figure 11), la surface arrondie 151B dudit élément intermédiaire 150 est tournée vers le bord longitudinal de l'encoche 141 du couvercle 140, si bien que l'utilisateur peut tout d'abord ouvrir à 90 degrés le couvercle 140 par rapport au cadre 120 en faisant pivoter l'élément intermédiaire 150 sur le cadre 120 autour du premier axe constitué par la tige 155, puis il peut ouvrir le couvercle 140 d'un angle supérieur à 90 degrés en faisant pivoter le couvercle 140 le long de la surface arrondie 151B de l'élément intermédiaire 150 autour du second axe constitué par la tige 156.

Dans la deuxième configuration de montage de l'élément intermédiaire 150 (représentée sur la figure 12), la surface plane 151A de butée dudit élément intermédiaire 150 est en appui contre le bord longitudinal de l'encoche 141 du couvercle 140 et le couvercle 140 est également en appui contre la nervure 152 de l'élément intermédiaire 150 si bien que le couvercle 140 est maintenu fixe par rapport à l'élément intermédiaire 150 et l'utilisateur peut alors seulement ouvrir à 90 degrés le couvercle 140 par rapport au cadre 120 en faisant pivoter l'élément intermédiaire 150 sur le cadre 120 autour du premier axe constitué par la tige 155.

Avantageusement, quelle que soit la configuration de montage de l'élément intermédiaire 150, lorsque le couvercle 140 est fermé sur le cadre 120, il repose sur la nervure 152 dudit élément intermédiaire 150 qui empêche ledit couvercle 140 de se déformer et de former un ventre bombé une fois verrouillé sur le cadre 120.

A propos du verrouillage du couvercle 140 fermé sur le cadre 120, comme le montrent les figures 1 à 3 et 8 à 10, le couvercle 140 comprend un orifice 144 traversant, disposé à proximité de son bord périphérique, diamétralement opposé à l'encoche 141.

Cet orifice 144 comporte sur sa paroi intérieure une nervure 142 qui en réduit la section.

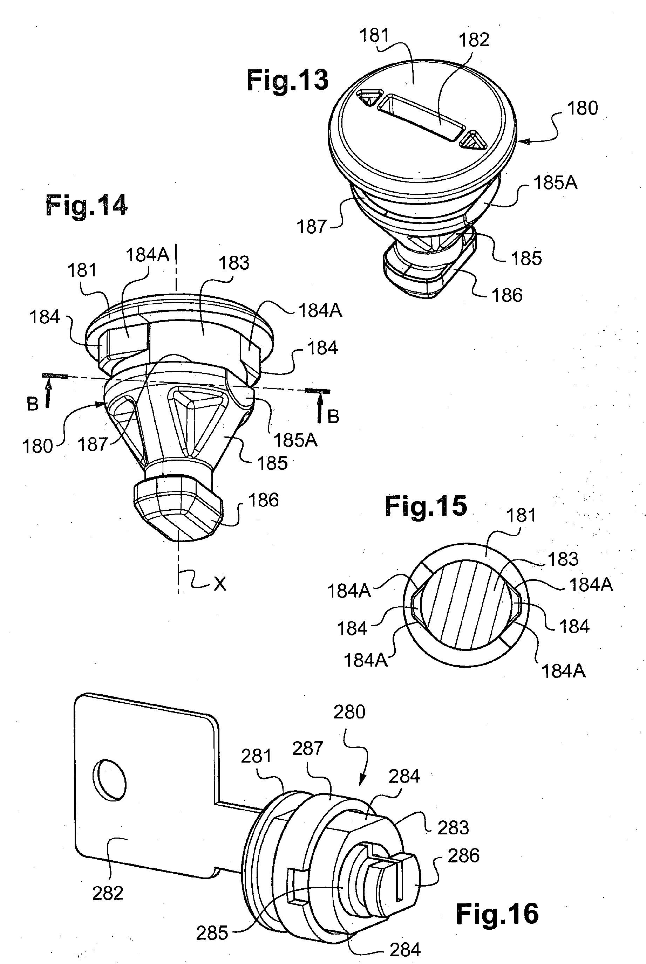

Cet orifice 144 accueille ici un verrou 180 plus particulièrement représenté sur les figures 13 à 15 mais, avantageusement, il pourrait également accueillir un mécanisme de serrure 280 tel que représenté sur la figure 16.

La nervure 142 prévue dans l'orifice 144 présente un contour circulaire avec deux méplats 142A diamétralement opposés. Les méplats 142A sont positionnés sur le diamètre D du couvercle 140 sur lequel sont alignés l'orifice 144 et l'encoche 141 (voir figure 10).

Comme le montrent plus particulièrement les figures 13 à 15, le verrou 180 comporte une tête de manoeuvre 181 dont la face avant est pourvue d'une fente 182 pour l'introduction de la pointe d'un outil de manoeuvre. Il comporte un corps qui s'étend à partir de la face arrière de la tête de manoeuvre 181 suivant un axe X longitudinal perpendiculaire à cette face arrière.

Le corps du verrou 180 comprend une partie cylindrique 183 attachée à la tête de manoeuvre 181 et, dans le prolongement de cette partie cylindrique 183, une partie globalement tronconique 185 qui porte à son extrémité libre une came 186 au contour globalement oblong.

La partie globalement tronconique 185 du verrou 180 s'inscrit dans un gabarit cylindrique de diamètre supérieur au diamètre de la partie cylindrique 183 si bien qu'un rebord 187 est formé à la jonction entre les deux parties 183, 185 du corps du verrou 180.

La partie cylindrique 183 du corps du verrou 180 porte sur sa face externe deux plots 184 diamétralement opposés, pourvus de surfaces de butée 184A planes et obliques (voir figure 15).

La partie globalement tronconique 185 comporte sur sa face externe deux méplats 185A diamétralement opposés qui jouxtent le rebord 187 au droit des surfaces de butée 184A des plots 184.

Le verrou 180 est une pièce monobloc pouvant être réalisée en matière plastique moulée.

Le verrou 180 est monté au travers de l'orifice 144 traversant du couvercle 140 selon une orientation choisie imposée par les méplats 185A du corps du verrou 180 qui glissent sur les méplats 142A du contour de la nervure 142 de l'orifice 144.

Lorsque le verrou 180 est engagé au travers de l'orifice144 du couvercle 140, la tête de manoeuvre 181 du verrou repose sur la face avant de la nervure 142 prévue à l'intérieur de l'orifice 144, la partie cylindrique 183 de son corps reste positionnée dans l'espace délimité par ladite nervure 142 dudit orifice 144 tandis que la partie globalement tronconique 185 de son corps s'étend au-delà dudit orifice 144, en saillie de la face arrière 140B du couvercle 140.

Le verrou 180 est fixé axialement dans l'orifice144 grâce à une rondelle 170 clippée autour du corps 183 du verrou 180, prise en sandwich entre la face arrière de la nervure 142 prévue dans l'orifice 144 et le rebord 187 du corps du verrou 180. Ladite nervure 142 prévue à l'intérieur de l'orifice 144 du couvercle 140 est donc prise en sandwich entre la tête de manoeuvre 181 du verrou 180 et la rondelle 170 (voir figures 11 et 12), ce qui retient vers l'avant et vers l'arrière le verrou 180 dans l'orifice144.

Le verrou 180 peut pivoter dans l'orifice 144 traversant du couvercle 140 d'un quart de tour autour de son axe X entre une position verrouillée et une position déverrouillée.

Les deux positions verrouillée et déverrouillée du verrou 180 sont indexées ou fixées par la mise en butée des surfaces de butée 184A des plots 184 portés par la partie cylindrique 183 du corps du verrou 180, contre les méplats 142A du contour de la nervure 142 de l'orifice 144 du couvercle 140.

Lorsque le couvercle 140 équipé du verrou 180 en position déverrouillée, est fermé sur le cadre 120, la came 186 du verrou 180 est orientée de telle sorte que son grand axe est parallèle au grand axe de l'ouverture oblongue 125B prévue dans le fond 125A dudit renfoncement cylindrique 125 du cadre 120. Ainsi la came 186 passe au travers de cette ouverture oblongue 125B et s'introduit à l'intérieur dudit cylindre 115 du boîtier 110.

Pour verrouiller le couvercle 140 sur le cadre 120, il suffit d'introduire la pointe d'un outil dans la fente 182 de la tête de manoeuvre 181 du verrou 180 pour le faire pivoter d'un quart de tour autour de son axe X afin d'orienter le grand axe de la came 186 perpendiculairement au grand axe de l'ouverture oblongue 125B du cadre 120. La came 186 ainsi positionnée en position verrouillée ne peut plus sortir du cadre 120 au travers de l'ouverture oblongue 125B et elle verrouille le couvercle 140 en position fermée sur le cadre 120.

Le renfoncement cylindrique 125 du cadre 120 loge un ressort 160 qui est comprimé par le verrou 180 lorsqu'il est verrouillé sur le cadre 120. Lors du déverrouillage du verrou 180, le ressort 160 se détend et pousse le couvercle 140 hors du cadre 120. Il participe ainsi à l'ouverture du couvercle 140.

L'orifice 144 traversant du couvercle 140 peut également accueillir un mécanisme de serrure 280 tel que représenté sur la figure 16.

Ce mécanisme de serrure 280 comporte un barillet 283 cylindrique qui loge un pêne 285 rotatif sous l'action d'une clef 282. Le pêne 285 porte à son extrémité libre une came 286 au contour globalement oblong. Le barillet 283 comporte, à l'avant, un rebord externe 281 destiné à prendre appui sur la face avant de la nervure 142 prévue à l'intérieur de l'orifice 144 du couvercle 140. Le barillet 283 comporte en outre sur sa face externe cylindrique deux méplats 284 longitudinaux diamétralement opposés, destinés à se plaquer contre les méplats 142A prévus dans le contour de la nervure 142 de l'orifice 144 pour fixer le barillet 283 dans l'orifice 144 et interdire ainsi toute rotation éventuelle dudit barillet. Le mécanisme de serrure 280 comprend une bague 287 positionnée dans l'orifice 144 autour du barillet 283 contre la face arrière de la nervure 142 de l'orifice 144. Ainsi, ladite nervure 142 est prise en sandwich entre le rebord externe 281 du barillet 283 et la bague 287 afin de bloquer axialement le barillet 283 dans l'orifice 144 du couvercle 140.

Lorsque le couvercle 140 équipé du mécanisme de serrure 280 en position déverrouillée, est fermé sur le cadre 120, la came 286 du pêne 285 est orientée de telle sorte que son grand axe est parallèle au grand axe de l'ouverture oblongue 125B prévue dans le fond 125A dudit renfoncement cylindrique 125 du cadre 120. Ainsi la came 286 passe au travers de cette ouverture oblongue 125B et s'introduit à l'intérieur dudit cylindre 115 du boîtier 110.

Pour verrouiller le couvercle 140 sur le cadre 120, il suffit de tourner la clef 282 pour faire pivoter le pêne 285 dans le barillet 283 d'un quart de tour autour de son axe longitudinal afin d'orienter le grand axe de la came 286 perpendiculairement au grand axe de l'ouverture oblongue 125B du cadre 120. La came 286 ainsi positionnée en position verrouillée ne peut plus sortir du cadre 120 au travers de l'ouverture oblongue 125B et elle verrouille le couvercle 140 en position fermée sur le cadre 120.

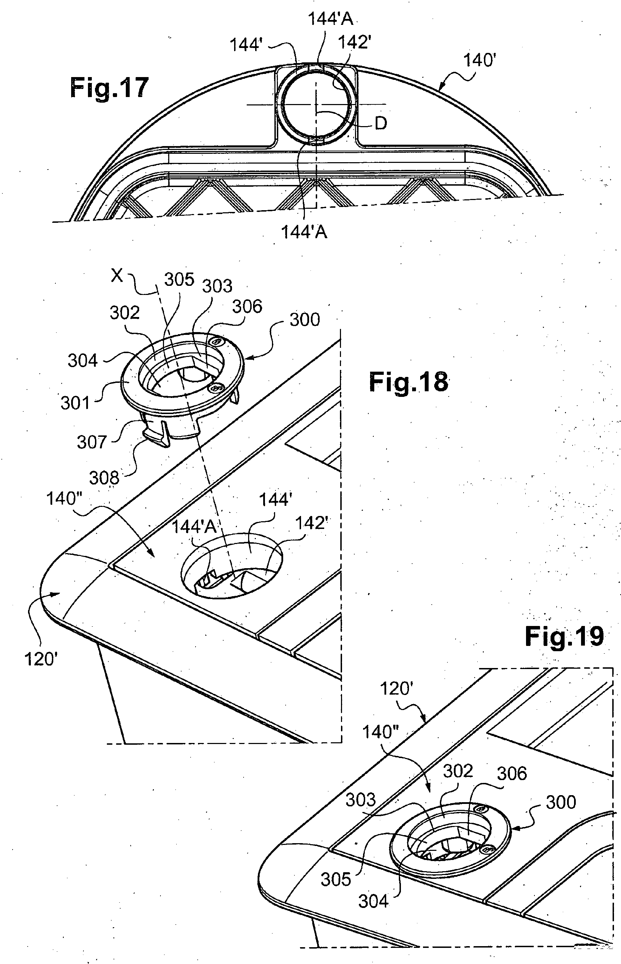

Sur les figures 17 à 24, on a représenté deux variantes de la boîte de sol 100 dans lesquelles le couvercle 140' ; 140" ne comporte pas un orifice pourvu d'une nervure intérieure avec deux méplats diamétralement opposés.

Ici, chaque couvercle 140' ; 140" comporte un simple orifice 142' qui traverse l'épaisseur du couvercle 140' ; 140". Cet orifice 142' présente une section circulaire et une paroi interne lisse sans nervure intérieure. Mais avantageusement, selon ces variantes, cet orifice 142' présente des dimensions internes égales au jeu près aux dimensions externes d'une bague 300 d'un accessoire de verrouillage et il est bordé à l'arrière du couvercle 140' ; 140", par une paroi 144' cylindrique pourvue de deux encoches 144'A diamétralement opposées, agencées pour l'accrochage de deux dents d'accrochage 308 de la bague 300.

En effet, ces variantes de réalisation utilisent un accessoire de verrouillage à rapporter dans ledit orifice 142' traversant du couvercle 140' ; 140" de la boîte pour appareillage électrique pour autoriser le verrouillage dudit couvercle 140' ; 140" sur le cadre 120' de la boîte.

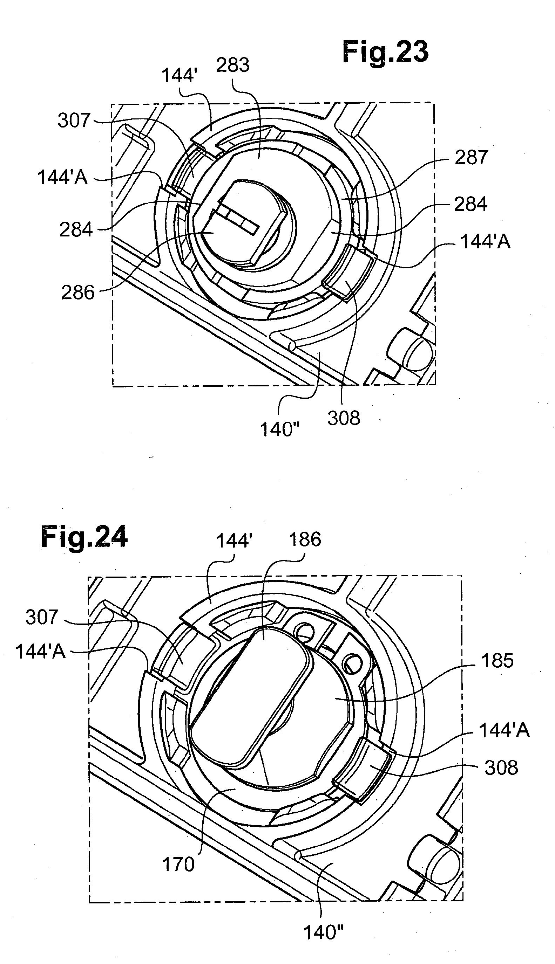

Cet accessoire de verrouillage comporte une bague 300 délimitant un évidement central 304 d'axe X destiné à accueillir axialement le barillet 283 du mécanisme de serrure 280 (voir figure 23) ou le corps 183, 185 du verrou 180 (voir figure 24).

La bague 300 est avantageusement pourvue de moyens de blocage 306 agencés pour bloquer la rotation autour de l'axe X du barillet 283 dans ledit évidement central 304 et pour limiter la rotation autour de l'axe X du corps 183, 185 du verrou 180 à un angle déterminé, ici un angle de 45 degrés (1 quart de tour).

Plus particulièrement, comme le montrent mieux les figures 18 à 20, la bague 300 comporte une paroi cylindrique d'axe X dont le bord avant est bordé par un rebord externe 301 et qui porte sur sa face interne une nervure 303 qui en réduit la section de passage. Cette nervure 303 comporte un contour circulaire 305 qui délimite l'évidement central 304. Deux méplats 306 diamétralement opposés sont formés dans le profil du contour circulaire 305 de l'évidement central 304 de la bague 300. Ces deux méplats 306 constituent ici avantageusement lesdits moyens de blocage précités de la bague 300.

Dans l'exemple préférentiel représenté sur les figures 18 à 24, la bague 300 comporte deux pattes 307 diamétralement opposées, découpées dans la paroi cylindrique, ces pattes 307 s'étendent parallèlement à l'axe X de l'évidement central 304 et portent chacune en saillie à proximité de leur extrémité libre une dent d'accrochage 308.

Bien entendu, selon une variante non représentée, la bague peut ne comporter qu'une seule patte pourvue à son extrémité libre d'une dent d'accrochage.

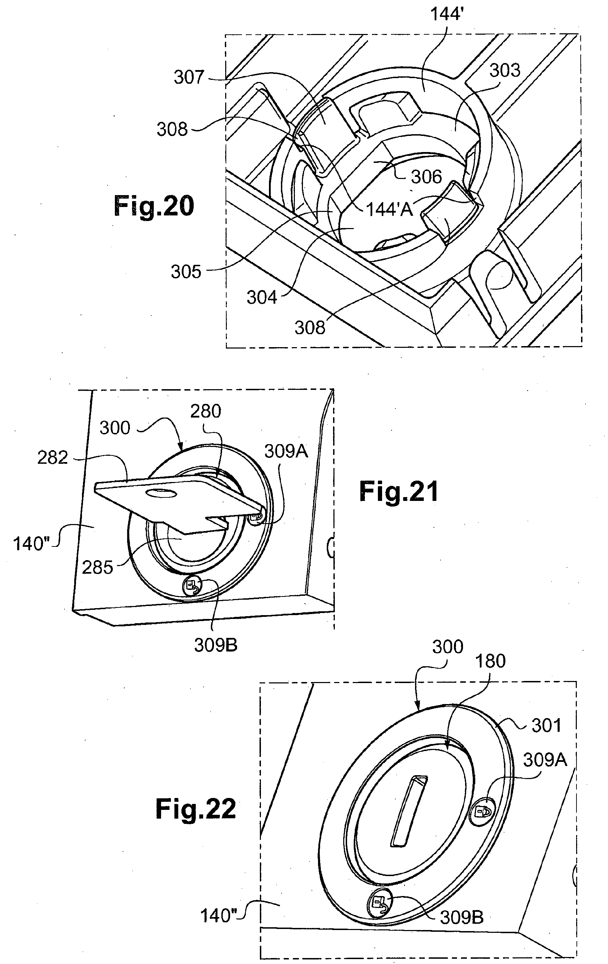

En outre, le rebord externe 301 de la bague 300 comprend sur une face avant des moyens de repérage 309A, 309B des positions verrouillée et déverrouillée de la came 186 du verrou 180 (voir figures 22, 24) ou de la came 286 du pêne 285 du mécanisme de serrure 280 (voir figures 21, 23). Ici, lesdits moyens de repérage comprennent des marquages 309A, 309B représentant deux verrous fermé (pour la position verrouillée) et ouvert (pour la position déverrouillée).

La bague 300 est préférentiellement réalisée d'une seule pièce en matière synthétique et plus particulièrement en matière plastique.

Avantageusement, la boîte ou le boîtier représenté sur les figures 17 à 24 est livré avec un couvercle 140' ; 140" non verrouillable sur le cadre 120'. Pour cela, en sortie de fabrication, l'orifice 142' traversant du couvercle 140' ; 140" est fermé à l'avant du couvercle par un opercule (non représenté).

Dans un mode de réalisation préférentiel, l'opercule vient de formation avec le couvercle, il peut comprendre en son centre un moyen de positionnement de la pointe d'un foret de perçage ou il peut être réalisé de telle manière qu'il est défonçable ou découpable (en étant par exemple attaché au couvercle par des parties de plus faible épaisseur).

En variante, l'opercule est rapporté sur le couvercle de sorte qu'il forme un bouchon qui ferme l'orifice 142'.

Pour verrouiller le couvercle 140' ; 140" sur le cadre 120' de la boîte, l'installateur retire alors cet opercule (à l'aide d'un foret de perçage par exemple) et utilise un ensemble de verrouillage qui comprend un accessoire de verrouillage tel que décrit précédemment et le verrou 180 ou le mécanisme de serrure 280.

Comme le montrent les figures 18 à 20, après avoir retiré l'opercule, l'installateur engage la bague 300 dans l'orifice 142' traversant du couvercle 140" jusqu'à ce que le rebord externe 301 de la bague 300 prenne appui contre la face avant du couvercle 140" (voir figure 19) et que les dents d'accrochage 308 de la bague 300 s'accrochent sur le bord des encoches 144A' de la paroi 144' prévue à l'arrière du couvercle 140" (voir figure 20).

Grâce à cet accessoire de verrouillage, l'installateur agence le couvercle 140' ;140" dans la configuration du couvercle 140 de la boîte de sol représentée sur les figures 1 à 3, avec un orifice 142' traversant pourvu d'une nervure 303 qui délimite un évidement central 304 dont le contour circulaire 305 comporte deux méplats 306 diamétralement opposés.

Il peut alors équiper le couvercle 140' ; 140" du verrou 180 ou du mécanisme de serrure 280 pour pouvoir ultérieurement le verrouiller sur le cadre 120'.

Comme le montrent les figures 22 et 24, le verrou 180 est monté au travers de l'évidement central 304 de l'orifice 142' du couvercle 140" selon une orientation choisie imposée lors du montage par les méplats 185A du corps du verrou 180 qui glissent sur les méplats 306 du contour de la nervure 303.

Lorsque le verrou 180 est engagé au travers de l'évidement central 304, la tête de manoeuvre du verrou 180 repose sur la face avant de la nervure 303, la partie cylindrique du corps du verrou 180 reste positionnée dans l'espace délimité par ladite nervure 303 tandis que la partie globalement tronconique 185 de son corps s'étend au-delà de l'évidement central 304, en saillie de la face arrière du couvercle 140" (voir figure 24).

Le verrou 180 est fixé axialement dans l'évidement central 304 grâce à la rondelle 170 clippée autour du corps du verrou 180, prise en sandwich entre la face arrière de la nervure 303 et le rebord du corps du verrou 180. Ladite nervure 303 prévue à l'intérieur de l'orifice 142' du couvercle 140" est donc prise en sandwich entre la tête de manoeuvre du verrou 180 et la rondelle 170 (voir figure 24), ce qui retient vers l'avant et vers l'arrière le verrou 180 dans l'orifice 142'.

Le verrou 180 peut pivoter dans l'orifice 142' du couvercle 140" d'un quart de tour autour de son axe X entre une position verrouillée (marquée par le marquage 309B, voir figure 22) et une position déverrouillée (marquée par le marquage 309A).

Les deux positions verrouillée et déverrouillée du verrou 180 sont indexées ou fixées par la mise en butée des surfaces de butée 184A de plots 184 portés par la partie cylindrique 183 du corps du verrou 180, contre les méplats 306 du contour de la nervure 303 de l'orifice 142' du couvercle 140'.

Comme le montrent les figures 21 et 23, le barillet 283 du mécanisme de serrure 280 est introduit au travers de l'évidement central 304 de l'orifice 142' du couvercle 140" de sorte que les deux méplats 284 prévus sur la face externe cylindrique du barillet 283 se plaquent contre les méplats 306 prévus dans le contour de la nervure 303 pour fixer le barillet 283 dans l'évidement central et interdire ainsi toute rotation éventuelle dudit barillet. Dans cette position, le rebord externe du barillet est en appui sur la face avant de la nervure 303. La bague 287 du mécanisme de serrure 280 est positionnée dans l'orifice 142' autour du barillet 283 contre la face arrière de la nervure 303. Ainsi, ladite nervure 303 est prise en sandwich entre le rebord externe du barillet 283 et la bague 287 afin de bloquer axialement le barillet 283 dans l'orifice 142' du couvercle 140".

A l'aide de la clef 282, l'utilisateur peut verrouiller le couvercle 140" sur le cadre 120' en faisant tourner d'un quart de tour le pêne 285 dans le barillet 283 entre sa position déverrouillée (marquée par le marquage 309B) et sa position verrouillée (marquée par le marquage 309A voir figure 21).

La présente invention n'est nullement limitée aux modes de réalisation décrits et représentés mais l'homme du métier saura y apporter toute variante.

## Revendications

1. Ensemble articulé d'un boîtier (100) pour appareillage électrique, comprenant un cadre (120) qui délimite un évidement central et un couvercle (140) qui, monté pivotant sur le cadre (120) par l'intermédiaire d'une articulation, est adapté à fermer cet évidement central, ladite articulation comprenant un élément intermédiaire (150) monté à pivotement sur le cadre autour d'un premier axe (155) et coopérant avec ledit couvercle (140) autour d'un second axe (156) parallèle audit premier axe (155), l'élément intermédiaire (150) présentant à proximité du second axe (156), d'une part, une surface arrondie (151B) destinée à coopérer avec ledit couvercle (140) pour autoriser le pivotement dudit couvercle (140) autour du second axe (156), **caractérisé en ce que** l'élément intermédiaire comprend d'autre part, un moyen de butée (151 A) destiné à coopérer avec ledit couvercle (140) pour interdire le pivotement dudit couvercle (140) autour du second axe (156), et **en ce que** ledit élément intermédiaire (150) est adapté à être rapporté sur le cadre dans deux configurations différentes orientées à 180 degrés l'une par rapport à l'autre, à savoir, une première configuration dans laquelle le couvercle (140) coopère avec ladite surface arrondie (151 B) et une seconde configuration dans laquelle le couvercle (140) coopère avec ledit moyen de butée (151A).

2. Ensemble articulé selon la revendication 1, dans lequel ledit élément intermédiaire (150) présente une section de forme générale oblongue s'étendant suivant un grand axe (A), et il est percé de deux ouvertures traversantes (153,154) qui s'étendent parallèlement à un axe longitudinal (B) perpendiculaire audit grand axe (A), les deux ouvertures traversantes (153,154) étant situées le long de deux bords longitudinaux d'extrémité (151E,152E) de l'élément intermédiaire (150) et accueillant deux tiges (155,156) qui forment les premier et second axes.

3. Ensemble articulé selon la revendication 2, dans lequel ladite surface arrondie (151 B) de l'élément intermédiaire (150) constitue une partie de la surface externe dudit élément intermédiaire (150) qui entoure partiellement l'ouverture traversante (154) qui accueille la tige (156) formant le second axe.

4. Ensemble articulé selon l'une des revendications 2 et 3, dans lequel ledit moyen de butée est une surface plane (151 A) qui s'étend perpendiculairement audit grand axe (A) de la section de l'élément intermédiaire (150), cette surface plane (151A) s'étendant en longueur parallèlement audit axe longitudinal (B) de l'élément intermédiaire (150) et en hauteur perpendiculairement à cet axe longitudinal (B).

5. Ensemble articulé selon la revendication précédente, dans lequel la surface plane (151 A) constitue une partie de la surface externe de la partie intermédiaire (150) située le long d'un bord longitudinal d'extrémité (152E) de l'élément intermédiaire (150) au droit de l'ouverture traversante (154) qui accueille la tige (156) formant le second axe.

6. Ensemble articulé selon l'une des revendications 2 et 3, dans lequel ledit moyen de butée est une surface plane qui s'étend en porte-à-faux à partir de l'élément intermédiaire, parallèlement au grand axe de la section dudit élément intermédiaire.

7. Ensemble articulé selon la revendication précédente, dans lequel ladite surface plane appartient à un verrou rapporté sur ledit élément intermédiaire.

8. Ensemble articulé selon l'une des revendications 2 à 7, dans lequel ledit élément intermédiaire (150) porte en saillie de sa surface externe, une nervure (152) de section carrée qui s'étend parallèlement à l'axe longitudinal (B) de l'élément intermédiaire (150), cette nervure (152) comportant, d'une part, deux faces planes opposées (152A,152B) parallèles tournées respectivement vers ledit moyen de butée (151A) et ladite surface arrondie (151B), et, d'autre part, une face plane d'extrémité (152E) perpendiculaire aux deux faces planes opposées (152A,152B), cette face plane d'extrémité constituant un bord longitudinal d'extrémité de l'élément intermédiaire (150).

9. Boîte de sol (100) pour appareillage électrique comprenant un boîtier (110) ouvert à l'avant et un ensemble articulé selon l'une quelconque des revendications 1 à 8 rapporté sur le boîtier (110) autour de son ouverture avant.

10. Boîte de sol selon la revendication 9, dans laquelle elle comporte une bague encliquetée dans un orifice du couvercle, cette bague délimitant un évidement central d'axe X destiné à accueillir axialement le barillet d'un mécanisme de serrure ou le corps d'un verrou, et étant pourvue de moyens de blocage agencés pour bloquer la rotation autour de l'axe X du barillet dans ledit évidement central et pour limiter la rotation autour de l'axe X du corps du verrou à un angle déterminé.

11. Boîte de sol selon la revendication 10, dans laquelle lesdits moyens de blocage comprennent deux méplats diamétralement opposés formés dans un profil circulaire du contour de l'évidement central de la bague.

12. Boîte de sol selon la revendication 9, dans laquelle le couvercle comporte un orifice traversant dont les dimensions internes sont égales au jeu près aux dimensions externes d'une bague délimitant un évidement central d'axe X destiné à accueillir axialement le barillet d'un mécanisme de serrure ou le corps d'un verrou, et étant pourvue, d'une part, de moyens de blocage agencés pour bloquer la rotation autour de l'axe X du barillet dans ledit évidement central et pour limiter la rotation autour de l'axe X du corps du verrou à un angle déterminé, et, d'autre part, d'au moins une patte qui s'étend parallèlement à l'axe X de l'évidement central et qui porte en saillie à proximité de son extrémité libre une dent d'accrochage, ledit orifice du couvercle étant fermé à l'avant du couvercle, par un opercule pourvu en son centre d'un moyen de positionnement de la pointe d'un foret de perçage, et étant bordé à l'arrière du couvercle, par une paroi pourvue d'une encoche agencée pour l'accrochage de la dent d'accrochage de ladite bague.

## Patentansprüche

1. Gelenksystem einer Dose (100) für Elektrogeräte mit einem Rahmen (120), der eine zentrale Aussparung und einen Deckel (140) abgrenzt, welcher durch ein Gelenk klappbar auf dem Rahmen (120) montiert ist und diese zentrale Aussparung schließen kann, wobei dieses Gelenk ein Zwischenelement (150) umfasst, das um eine erste Achse (155) klappbar auf dem Rahmen montiert ist und mit diesem Deckel (140) um eine zweite (156), zur ersten Achse (155) parallelen Achse zusammenwirkt, wobei das Zwischenelement (150) in der Nähe der zweiten Achse (156) zum einen eine abgerundete Oberfläche (151B) für das Zusammenwirken mit diesem Deckel (140) aufweist, um das Schwenken des Deckels (140) um die zweite Achse (156) zuzulassen, **dadurch gekennzeichnet, dass** das Zwischenelement zum anderen ein Anschlagmittel (151A) zum Zusammenwirken mit diesem Deckel (140) umfasst, um das Schwenken des Deckels (140) um diese zweite Achse (156) zu verhindern, und dadurch, dass das Zwischenelement (150) in zwei unterschiedlichen Ausführungen, die in 180 Grad zueinander liegen, auf den Rahmen aufgesetzt werden kann, nämlich in einer ersten Ausführung, in der der Deckel (140) mit der abgerundeten Oberfläche (151B) zusammenwirkt, sowie in einer zweiten Ausführung, in der der Deckel (140) mit dem Anschlagmittel (151A) zusammenwirkt.

2. Gelenksystem nach Anspruch 1, bei dem das Zwischenelement (150) einen im Allgemeinen länglichen Querschnitt aufweist, der sich entlang einer großen Achse (A) erstreckt, und das von zwei durchgehenden Öffnungen (153, 154) durchbohrt ist, die sich parallel zur einer Längsachse (B) erstrecken, die senkrecht zur großen Achse (A) liegt, wobei die zwei durchgehenden Öffnungen (153,154) entlang von zwei Längsrändern (151E, 152E) am Ende des Zwischenelements (150) liegen und zwei Stifte (155, 156) aufnehmen, die die erste und zweite Achse bilden.

3. Gelenksystem nach Anspruch 2, bei dem die abgerundete Oberfläche (151B) des Zwischenelements (150) einen Teil der Außenfläche des Zwischenelements (150) bildet, welches die durchgehende Öffnung (154), die den die zweite Achse bildenden Stift (156) aufnimmt, teilweise umrandet.

4. Gelenksystem nach einem der Ansprüche 2 und 3, bei dem das Anschlagmittel eine ebene Fläche (151A) ist, die sich senkrecht zur großen Achse (A) des Querschnitts des Zwischenelements (150) erstreckt, wobei sich diese ebene Fläche (151A) der Länge nach parallel zur Längsache (B) des Zwischenelements (150) und der Höhe nach senkrecht zu dieser Längsachse (B) erstreckt.

5. Gelenksystem nach vorausgehendem Anspruch, bei dem die ebene Fläche (151A) einen Teil der Außenfläche des Zwischenabschnitts (150) bildet, der entlang eines Längsrandes (152E) am Ende des Zwischenelements (150) vor der durchgehenden Öffnung (154) liegt, die den die zweite Achse bildenden Stift (156) aufnimmt.

6. Gelenksystem nach einem der Ansprüche 2 und 3, bei dem das Anschlagmittel eine ebene Fläche ist, die sich vom Zwischenelement ausgehend, überhängend und parallel zur großen Achse des Querschnitts des Zwischenelements erstreckt.

7. Gelenksystem nach vorausgehendem Anspruch, bei dem die ebene Fläche zu einem, auf das Zwischenelement aufgesetzten, Riegel gehört.

8. Gelenksystem nach einem der Ansprüche 2 bis 7, bei dem das Zwischenelement (150) von seiner Außenfläche wegstehend eine quadratische Rippe (152) trägt, die sich parallel zur Längsachse (B) des Zwischenelements (150) erstreckt, wobei diese Rippe (152) zum einen zwei gegenüberliegende, parallele ebene Flächen (152A,152B) aufweist, die jeweils zum Anschlagmittel (151A) und zur abgerundeten Fläche (151B) hin gerichtet sind, sowie zum anderen eine ebene Endfläche (152E), die senkrecht zu den zwei gegenüberliegenden ebenen Flächen (152A,152B) liegt, wobei diese ebene Endfläche einen abschließenden Längsrand des Zwischenelements (150) bildet.

9. Fußbodensteckdose (100) für elektrische Geräte mit einer vorne offenen Dose (110) und einem Gelenksystem nach einem der Ansprüche 1 bis 8, das um die vordere Öffnung der Dose herum auf die Dose (110) aufgesetzt wird.

10. Fußbodensteckdose nach Anspruch 9, die einen in eine Öffnung des Deckels einschnappenden Ring umfasst, der eine zentrale Aussparung in X-Achse-Richtung abgrenzt, die in axialer Richtung den Schließzylinder eines Schlossmechanismus oder den Hauptteil eines Riegels aufnehmen kann, und mit Spannmitteln versehen ist, die angeordnet sind, um das Drehen um die X-Achse des Schließzylinders in der zentralen Aussparung zu blockieren und um das Drehen des Riegelhauptteils um die X-Achse auf einen bestimmten Winkel einzuschränken.

11. Fußbodensteckdose nach Anspruch 10, bei der die Spannmittel zwei entgegengesetzt angeordnete Stege umfassen, die in einem Rundprofil des Randes der zentralen Aussparung des Rings geformt sind.

12. Fußbodensteckdose nach Anspruch 9, bei der der Deckel eine durchgehende Öffnung umfasst, deren Innenmaße bis auf das Spiel den Außenmaßen eines eine zentrale Aussparung in X-Achse-Richtung zur Aufnahme in axialer Richtung des Schließzylinders eines Schlossmechanismus oder des Hauptteils eines Riegels abgrenzenden Rings entsprechen, und die zum einen mit Spannmitteln versehen ist, die angeordnet sind, um das Drehen um die X-Achse des Schließzylinders in der zentralen Aussparung zu blockieren und um das Drehen des Riegelhauptteils um die X-Achse auf einen bestimmten Winkel einzuschränken, sowie zum anderen mit einer Klammer versehen ist, die sich parallel zur X-Achse der zentralen Aussparung erstreckt und in der Nähe ihres freien Endes, überstehend, einen Zahn zum Einhängen trägt, wobei die Öffnung des Deckels auf der Vorderseite des Deckels durch ein Verschlusselement geschlossen ist, das in seiner Mitte mit einem Mittel zum Positionieren der Spitze eines Bohrers versehen ist und auf der Rückseite des Deckels von einer Wand umrandet ist, die mit einer angeordneten Nut zum Einhängen des Zahnes dieses Rings versehen ist.

## Claims

1. A hinged assembly for a casing (100) for electrical equipment, the casing including a frame (120) that defines a central recess, and a lid (140) that, pivotally mounted on the frame (120) by means of a hinge, is adapted to close the central recess, said hinge including an intermediate element (150) that is mounted to pivot on the frame about a first axis (155), and that co-operates with said lid (140) about a second axis (156) that is parallel to said first axis (155), the intermediate element (150) presenting, in the proximity of the second axis (156), firstly a rounded surface (151B) for co-operating with said lid (140) so as to allow said lid (140) to pivot about the second axis (156), the hinged assembly being **characterized in that** the intermediate element (150) presents secondly abutment means (151A) for co-operating with said lid (140) so as to prevent said lid (140) from pivoting about the second axis (156), and **in that** said intermediate element (150) is adapted to be fitted on the frame in two different configurations that are oriented at 180° relative to each other, namely a first configuration in which the lid (140) co-operates with said rounded surface (151B), and a second configuration in which the lid (140) co-operates with said abutment means (151A).

2. A hinged assembly according to claim 1, wherein said intermediate element (150) presents a generally oblong-shaped section that extends along a long axis (A), and it is pierced by two through openings (153, 154) that extend parallel to a longitudinal axis (B) that is perpendicular to said long axis (A), the two through openings (153, 154) being situated along two longitudinal end edges (151E, 152E) of the intermediate element (150), and receiving two rods (155, 156) that occupy the first and second axes.

3. A hinged assembly according to claim 2, wherein said rounded surface (151B) of the intermediate element (150) constitutes a portion of the outer surface of said intermediate element (150) that surrounds, in part, the through opening (154) that receives the rod (156) that occupies the second axis.

4. A hinged assembly according to claim 2 or claim 3, wherein said abutment means are a plane surface (151A) that extends perpendicular to said long axis (A) of the section of the intermediate element (150), the plane surface (151A) extending lengthwise parallel to said longitudinal axis (B) of the intermediate element (150), and heightwise perpendicular to the longitudinal axis (B).

5. A hinged assembly according to the preceding claim, wherein the plane surface (151A) constitutes a portion of the outer surface of the intermediate element (150) that is situated along a longitudinal end edge (152E) of the intermediate element (150), in register with the through opening (154) that receives the rod (156) that occupies the second axis.

6. A hinged assembly according to claim 2 or claim 3, wherein said abutment means are a plane surface that extends cantilevered out from the intermediate element, parallel to the long axis of the section of said intermediate element.

7. A hinged assembly according to the preceding claim, wherein said plane surface forms part of a latch that is fitted on said intermediate element.

8. A hinged assembly according to any one of claims 2 to 7, wherein said intermediate element (150) includes a rib (152) that projects from its outer surface, the rib being of section that is square and extending parallel to the longitudinal axis (B) of the intermediate element (150), the rib (152) comprising firstly two parallel opposite plane faces (152A, 152B) that face respectively towards said abutment means (151A) and said rounded surface (151B), and secondly a plane end face (152E) that is perpendicular to the two opposite plane faces (152A, 152B), the plane end face constituting a longitudinal end edge of the intermediate element (150).

9. A floor box (100) for electrical equipment, comprising a casing (110) that is open at the front, and a hinged assembly according to any one of claims 1 to 8 that is fitted to the casing (110) around its front opening.

10. A floor box according to claim 9, wherein it includes a ring that is snap-fastened in an orifice of the lid, the ring defining a central recess of axis X for axially receiving the cylinder of a lock mechanism or the body of a latch, and being provided with blocking means that are arranged so as to prevent the cylinder from turning in said central recess about the axis X, and so as to limit the degree to which the body of the latch can turn about the axis X to a determined angle.

11. A floor box according to claim 10, wherein said blocking means comprise two diametrally opposite flats that are formed in a circular profile of the outline of the central recess of the ring.

12. A floor box according to claim 9, wherein the lid includes a through orifice having inside dimensions that, ignoring clearance, are equal to the outside dimensions of a ring that defines a central recess of axis X for axially receiving the cylinder of a lock mechanism or the body of a latch, and that is provided firstly with blocking means that are arranged so as to prevent the cylinder from turning in said central recess about the axis X, and so as to limit the degree to which the body of the latch can turn about the axis X to a determined angle, and secondly with at least one tab that extends parallel to the axis X of the central recess, and that includes a fastener tooth that projects in the proximity of its free end, said orifice of the lid being closed at the front of the lid by a diaphragm that is provided at its center with positioner means for positioning the tip of a drill bit, and being bordered at the rear of the lid by a wall that is provided with a notch that is arranged for fastening the fastener tooth of said ring.
